# EUROPÄISCHE PATENTSCHRIFT

(11) **EP 0 505 748 B1**
(45) Veröffentlichungstag und Bekanntmachung des Hinweises auf die Patenterteilung: **26.04.1995**
(21) Anmeldenummer: 92103144.9
(22) Anmeldetag: 25.02.1992
(51) Int. Cl.: H02G 3/02

(54) **Befestigungselement zum Festlegen von Kabelkanälen an Wandbereichen**
Fastening element for attaching cable conduits to walls
Elément d'attache pour fixer des conduits de câbles au mur

(30) Priorität: 25.03.1991 DE 9103649 U
(43) Veröffentlichungstag der Anmeldung: 30.09.1992
(73) Patentinhaber: REHAU AG + Co, 95111 Rehau (DE)
(72) Erfinder: Schubert, Klaus, W-8676 Schwarzenbach/Saale (DE)

(56) Entgegenhaltungen:
- AT-B- 30 388
- DE-A- 2 408 095
- DE-A- 3 708 864
- DE-C- 3 805 330
- US-A- 2 921 607

## Beschreibung

Die Neuerung betrifft ein Befestigungselement zum Festlegen von Kabelkanälen an Wänden oder sonstigen Unterlagen, wobei der Kabelkanal aus einem U-förmigen Unterteil und einem mit den freien Enden der U-Schenkel verrastbaren Mittelteil besteht. Ein solcher Kabelkanal ist aus dem Deutschem Gebrauchsmuster 89 02 240 bekannt. Dieser Kabelkanal ist mit einem Hohlkammerprofilboden ausgestattet, wobei Stege zwischen der Außenwand und der Innenwand der Hohlkammer angeordnet sind. Zwei der inneren Stege verlaufen nicht parallel zu den Außenwänden des Kabelkanals, sondern in einem vorgegebenen Winkel zwischen der Innenwand und der Außenwand des Hohlkammerprofilbodens. Diese im Winkel geneigten Stege beabstanden die Innenwand und die Außenwand des Hohlkammerprofilbodens und bilden eine Hohlkammer mit dem Querschnitt eines im wesentlichen gleichschenkeligen Trapezes. Die kürzere Grundlinie dieses trapezförmigen Hohlkammerquerschnitts wird von der Außenwand des Hohlkammerprofilbodens begrenzt.

Die Neigung der Begrenzungswände dieses gleichschenkelig-trapezförmigen Hohlkammerquerschnitts entspricht dem trapezförmigen Winkel einer Senkkopfschraube. Zur Einbringung einer solchen Senkkopfschraube wird der gleichschenkelig-trapezförmige Hohlkammerquerschnitt an der Innenwand des Hohlkammerprofilbodens durch eine Bohrung geöffnet, deren Durchmesser wenigstens dem Durchmesser der größten Ausladung des Kopfes der Senkkopfschraube entspricht. Die Außenwand des Hohlkammerprofilbodens wird achsgleich mit der ersten Bohrung durch eine Nachfolgebohrung in einem Umfang geöffnet, der wenigstens dem Gewindequerschnitt der Senkkopfschraube entspricht.

Der Kabelkanal wird dann über die in die Bohrungen eingesetzten Senkkopfschrauben an Wandbereichen festgelegt, wobei die Köpfe der Senkkopfschrauben vollständig in dem gleichschenkelig-trapezförmigen Hohlkammerquerschnitt des Hohlkammerprofilbodens verschwinden.

Die konischen Wandflächen der trapezförmig angeordneten Mittelstege des Hohlkammerprofilbodens legen sich dabei an die konischen Querschnittsflächen der Senkkopfschraube an und mit dem Festziehen der Senkkopfschrauben auf der Unterlage wird der Kabelkanal auf dieser festgelegt.

Der Nachteil dieser bekannten Kabelkanalbefestigung wird u.a. darin gesehen, daß der Kabelkanal über mechanische Befestigungselemente direkt mit den Wandbereichen verbunden werden muß. Dies bedingt, daß bei der Belegung des Kabelkanals mit Kabeln der Deckel des Kanals entfernt werden muß. Wenn in solche, beispielsweise über Kopf verlegte Kabelkanäle weitere Kabel eingebracht werden sollen, ist diese Arbeit nur durch hohen Personal- und Kostenaufwand durchzuführen.

Aus der Deutschen Offenlegungsschrift 2 305 070 ist eine Schelle zur Halterung von Kabeln und/oder Rohren mit mindestens einem Befestigungsloch zur Befestigung an Wänden, Decken oder dergleichen bekannt. Die Schelle ist aus einer zu einem geschlossenen Ring gebogenen Kunststoff-Profilleiste mit zwei freien Endstücken gefertigt. Das eine der beiden Endstücke weist einen Haken und das andere der beiden Endstücke eine Öse zur Aufnahme des Hakens auf. Das Befestigungsloch für diese Schelle ist derart in der Kunststoff-Profilleiste angeordnet, daß die beiden Endstücke nach der Befestigung der Schelle aufbiegbar sind.

Ein den äußeren Abmessungen des Kabelkanals angepaßtes Befestigungselement ist in der AT-B-30388 beschrieben.

Obwohl derartige Schellen bei der Verlegung von Kabeln, Rohren und dergleichen eingesetzt werden, beinhalten sie schwerwiegende funktionelle Schwierigkeiten beim Öffnen und Schließen. Diese Schwierigkeiten liegen darin, daß das Montagepersonal sowohl beim Öffnen als auch beim Schließen nicht einhändig arbeiten kann, sondern jeweils zwei Hände für diese Arbeiten zur Verfügung stellen muß. Das erschwert erheblich das Halten verlegter Kabel bzw. das Einziehen neuer Kabel bei geöffneter oder zu schließender Schelle. Ein Lösen des Verschlusses bei einem durch verlegte Kabel oder Rohre gefüllten lichten Innenraum der Schelle ist praktisch nicht möglich, weil der Angriffspunkt für die Kraft zum Öffnen der Schelle in deren lichten Innenraum angeordnet ist.

Bei einem durch Kabel oder Rohre ausgefüllten lichten Innenraum der Schelle kann es ferner vorkommen, daß das Gewicht des Füllgutes so groß wird, daß der Haken aus der Öse gebogen wird und die Schelle damit von allein aufspringt.

Hier setzt die Neuerung ein, die es sich zur Aufgabe gestellt hat, ein Befestigungselement zum Festlegen von Kabelkanälen an Wänden oder sonstigen Unterlagen anzugeben, bei dem die Nachteile des Standes der Technik vermieden werden und bei dem insbesondere eine einfache und kostengünstige Verlegemöglichkeit zusätzlicher Kabel in die bereits an der Wandung befestigten Kabelkanäle gewährleistet ist. Neuerungsgemäß wird dazu vorgeschlagen, daß das Befestigungselement eine den äußeren Abmessungen des Kabelkanals angepaßte, schellenartige Profilleiste mit zwei freien Endbereichen ist, welche im Bereich der Übergreifung des freien Endes des ersten U-Schenkels über ein durchgehendes Filmscharnier mit dem über dem Deckel liegenden Deckelteil gegenüber ihren anderen Wandbereichen beweglich gestaltet ist, und welche im Bereich der Übergreifung des freien Endes des zweiten U-Schenkels an den freien Endbereichen durchgehende Haken und an dem Deckelteil einen durchgehenden Gegenhaken zur Bildung einer Rastverbindung aufweist.

Der besondere Vorteil einer solchen Befestigungsschelle für einen Kabelkanal besteht darin,daß der Kabelkanal außerhalb seiner Befestigung mit Kabeln belegt werden kann. Zur Festlegung des eigentlichen Kabelkanals werden zunächst in dafür vorgesehenen Abständen die schellenartigen Profilleisten über mechanische Befestigungselemente wie Schrauben, Nieten und dergleichen auf den Unterlagen festgelegt. Die Deckelteile sind dabei geöffnet, so daß der Kabelkanal ohne Schwierigkeiten in die schellenartigen Profilleisten einsetzbar ist. Der Kabelkanal selbst ist außerhalb der schellenartigen Profilleisten mit den Kabeln bestückt und über seinen eigenen Verschlußdeckel verschlossen worden.

Dieser mit Kabeln bestückte und verschlossene Kabelkanal wird danach in den Aufnahmeraum der an der Unterlage befestigten schellenartigen Profilleisten eingesetzt, das Deckelteil der schellenartigen Profilleisten über die durchgehenden Filmscharniere zur Herstellung der Rastverbindung verschwenkt und durch Verrastung von Haken und Gegenhaken werden die schellenartigen Profilleisten über dem eingebrachten Kabelkanal geschlossen. Dadurch ergibt sich eine einfache und leichte Montage der Befestigungsschellen, wobei z.B. in den Kabelkanälen verlegte Kabel nicht stören. Es ergibt sich eine gleiche, einfache und leichte Verlegung des Kabelkanals.

Eine gleiche Vereinfachung ergibt sich bei der Nachbelegung des Kabelkanals mit weiteren Kabeln. Hier wird bei den schellenartigen Profilleisten die Rastverbindung des Deckels gelöst, der Deckel über das Filmscharnier aufgeklappt und der Kabelkanal in geschlossenem Zustand komplett entnommen. Der Kabelkanal kann dann auf einer Unterlage abgesetzt und der Deckel geöffnet werden. Die neuen Kabel können in den Kabelkanal eingesetzt werden und nach Verschluß des Kabelkanals mit seinem Deckel kann dann der komplette belegte Kabelkanal über die schellenartigen Profilleisten wieder - wie beschrieben - in seinen festen Sitz an der Wand gebracht werden. Diese Arbeitsmethode ist insbesondere dann vorteilhaft, wenn der Kabelkanal in schlecht zugänglichen Bereichen oder über Kopf verlegt ist. Vorteile ergeben sich mit dem neuerungsgemäßen Befestigungselement, aber auch bei ganz normalen Verlegeformen solcher Kabelkanäle, denn auch in solchen Fällen ist damit zu rechnen, daß mit dem Öffnen des Deckels eines normal verlegten Kabelkanals die schon im Inneren des Kanals liegenden Kabel herausfallen. Dies ist mit der Befestigungsmethode der Neuerung nicht mehr zu befürchten.

Es hat sich als vorteilhaft erwiesen, daß die schellenartige Profilleiste nach innen ragende, durchgehende Abstandsstege aufweist. Mit diesen Abstandsstegen wird eine Zentrierung des in das Befestigungselement eingesetzten Kabelkanals erreicht.

Ein weiterer Vorteil dieser Abstandsstege ist darin zu sehen, daß die eigentliche Wanddicke der schellenartigen Profilleiste aus Gründen der Materialersparnis relativ dünn gehalten werden kann. Die Abstandsstege dienen dabei neben der Zentrierung des eingesetzten Kabelkanals als Verstärkungsleisten für die Wandbereiche der schellenartigen Profilleiste.

Als weiterer Vorteil hat sich gezeigt, daß die an der der Basis des U-förmigen Unterteils gegenüberliegenden Innenwand der Profilleiste angeformten Abstandsstege in der Höhe und im gegenseitigen Abstand voneinander eine Aufnahmenut für die Kopfbereiche mechanischer Befestigungsmittel bilden. Diese Abstandsstege können so hoch gestaltet sein, daß beispielsweise der Kopf der Befestigungsschraube, Befestigungsniete und dergleichen völlig in dem U-förmigen Aufnahmeraum verschwindet. Diese Abstandsstege dienen ferner als Führungen für die mechanische Herstellung der Bohrungen zum Durchgriff der Befestigungsmittel für das Festlegen des Befestigungselementes auf der Unterlage.

Das Befestigungselement der Neuerung kann im Koextrusionsverfahren einstückig hergestellt werden. Dabei wird aus einem Extruder das relativ harte thermoplastische Material der Wandbereiche und aus einem zweiten Extruder das weiche Material des Filmscharniers dem Werkzeug gleichförmig zugeführt. Diese Herstellungsart ist einfach und kostengünstig.

In der Zeichnung ist ein Ausführungsbeispiel des neuerungsgemäßen Befestigungselementes schematisch in verschiedenen Ansichten dargestellt; es zeigt:
Fig.1 den Querschnitt durch ein Befestigungselement mit eingesetztem Kabelkanal;
Fig.2 die Perspektivische Ansicht eines Befestigungselementes;
Fig.3 die perspektivische Ansicht eines Befestigungselementes mit eingesetztem Kabelkanal.

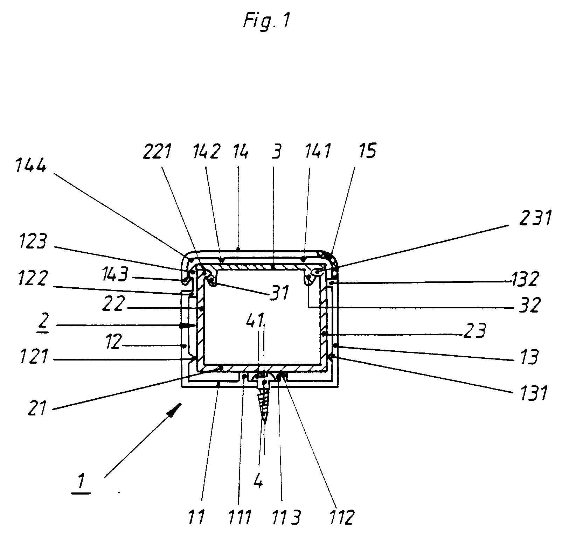

Fig.1 zeigt die schellenartige Profilleiste 1 mit der Basiswand 11, den beiden Seitenwänden 12, 13 sowie dem Deckelteil 14. Das Deckelteil 14 ist mit der Seitenwand 13 über das aus einem weichen Thermoplasten bestehende Filmscharnier 15 einstückig verbunden. An die Basiswand 11, die Seitenwände 12, 13 und das Deckelteil 14 sind nach innen ragende, durchgehende Abstandsstege 111, 112, 121, 122, 131, 132, 141, 142 angeformt.

Am freien Endbereich der Seitenwand 12 ist ein Haken 123 ausgeformt. Dieser als Raste dienende Haken 123 kommuniziert in Form einer Rastverbindung mit einem Gegenhaken 143, der am freien Ende des Deckelteils 14 angeformt ist. Das Deckelteil 14 ist zu diesem Zweck an seinem freien Ende in Form einer Abkröpfung 144 abgebogen, so daß der Haken 143 bei der Herstellung der Rastverbindung hinter den Haken 123 greifen und damit die Profilleiste 1 schließen kann.

Innerhalb der dargestellten, geschlossenen Profilleiste 1 ist der Kabelkanal 2 gezeigt, welcher U-förmig mit einer Basiswand 21 und den Seitenwänden 22, 23 gestaltet ist. An den freien Enden der Seitenwände 22, 23 sind nach innen weisende Rasthaken 221, 231 angeformt. Diese Rasthaken 221, 231 werden von Rasthaken 31, 32 hintergriffen, die entsprechend geformt am Deckelteil 3 angelenkt sind. Die Abstandsstege 111, 112, 121, 122, 131, 132, 141, 142 halten den Kabelkanal 2 zentriert im Aufnahmeraum der schellenartigen Profilleiste 1. Die beiden Abstandsstege 111, 112 sind hierbei gesondert geformt und bilden zwischen sich eine Aufnahmenut 113, in welcher der Kopfbereich 41 des schraubenförmigen Befestigungsmittels 4 versenkt ist.

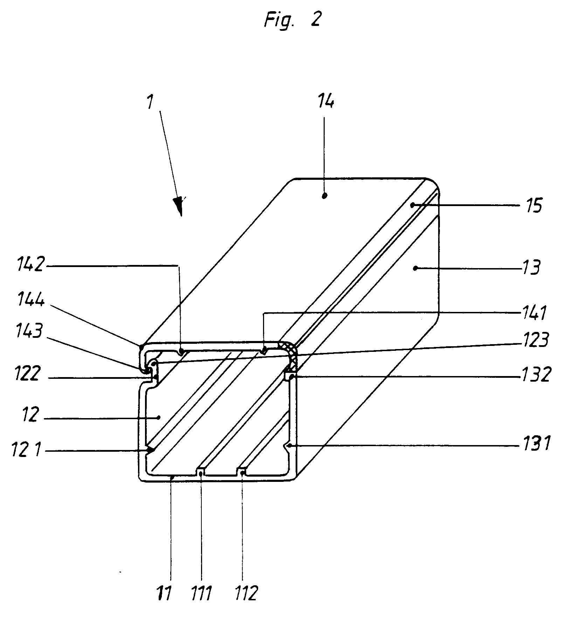

Fig.2 zeigt die perspektivische Ansicht einer schellenartigen Profilleiste 1 gemäß der Neuerung. Gleiche Merkmale haben hier gleiche Bezeichnungen erhalten wie in Fig.1. Die schellenartige Profilleiste 1 kann in beliebiger Länge aus der im Koextrusionsverfahren gebildeten Leistenform abgeschnitten und verwendet werden.

Es ist bei der Verlegung darauf zu achten, daß bei schweren, mit Kabeln gefüllten Kabelkanälen die Abstände zwischen den schellenartigen Profilleisten geringer sind als bei leichten Kabelkanälen. Auch kann durch Verwendung unterschiedlicher Längen der schellenartigen Profilleiste 1 die Haltekraft der Rastverbindung zwischen dem Deckelteil 14 und der Seitenwand 12 eingestellt werden.

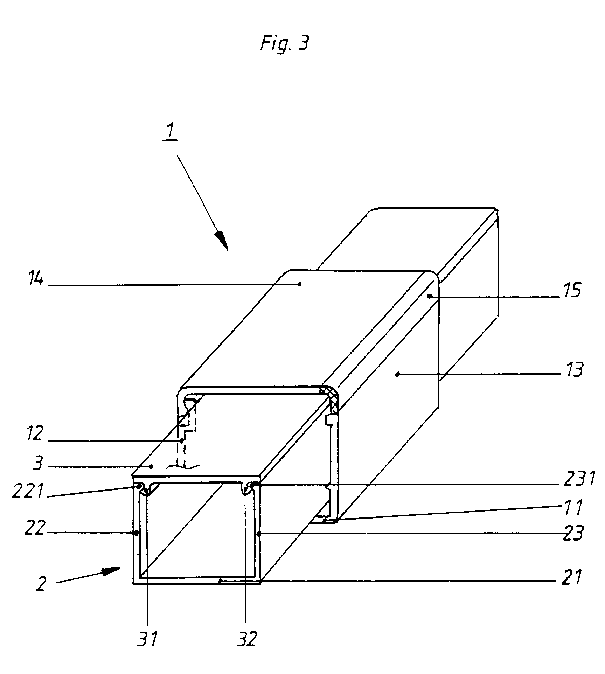

Fig. 3 zeigt die perspektivische Ansicht einer Profilleiste 1 mit von dieser umschlossenen Kabelkanal 2. Auch hier haben gleiche Merkmale gleiche Bezeichnungen erhalten, wobei auf die Wiedergabe der Detailbezeichnungen der schellenartigen Profilleiste 1 nach den Fig. 1 und 2 verzichtet worden ist.

## Patentansprüche

1. Befestigungselement zum Festlegen von Kabelkanälen an Wänden oder sonstigen Unterlagen, wobei der Kabelkanal aus einem U-förmigen Unterteil und einem mit den freien Enden der U-Schenkel verrastbaren Deckelteil besteht, dadurch gekennzeichnet, daß das Befestigungselement eine den äußeren Abmessungen des Kabelkanals angepaßte, schellenartige Profilleiste (1) mit zwei freien Endbereichen ist, welche im Bereich der Übergreifung des freien Endes des ersten U-Schenkels (23) über ein durchgehendes Filmscharnier (15) mit dem über dem Deckel (3) liegenden Deckelteil (14) gegenüber ihren anderen Wandbereichen (11, 12, 13) beweglich gestaltet ist, und welche im Bereich der Übergreifung des freien Endes des zweiten U-Schenkels (22) an den freien Endbereichen durchgehende Haken (123) und an dem Deckelteil (14) einen durchgehenden Gegenhaken (143) zur Bildung einer Rastverbindung aufweist.

2. Befestigungselement nach Anspruch 1, dadurch gekennzeichnet, daß die schellenartige Profilleiste (1) nach innen ragende, durchgehende Abstandsstege (111, 112, 121, 122, 131, 132, 141, 142) aufweist.

3. Befestigungselement nach Anspruch 2, dadurch gekennzeichnet, daß die an der der Basis (21) des U-förmigen Unterteils gegenüberliegenden Innenwand der schellenartigen Profilleiste (1) angeformten Abstandsstege (111, 112) in der Höhe und im gegenseitigen Abstand voneinander eine Aufnahmenut (113) für die Kopfbereiche (41) mechanischer Befestigungsmittel (4) bilden.

## Claims

1. Fastening element for fixing cable trunking to walls or other supporting surface, whereby the cable trunking comprises a U-shaped base and a cover section that can be snapped onto the unattached ends of the U-legs, characterised by the fact that the fastening element is a clamp-type profile strip (1) which is matched to the outer dimensions of the cable trunking and which has two unattached end sections which, in the area where the unattached end of the first U-leg (23) is enclasped, is connected by means of a continuous integral hinge (15) with the cover section (14) located over the cover (3) in such a way that it is moveable in relation to its other wall areas (11, 12, 13) and which, in the area where the unattached end of the second U-leg (22) is enclasped, exhibits a continuous hook-shaped lip (123) at the unattached ends and a continuous hook-shaped mating lip (143) along the cover section (14) so as to form a snap-fit connection.

2. Fastening element as described in claim 1, characterised by the fact that the clamp-type profile strip (1) exhibits inwardly projecting spacer webs (111, 112, 121, 122, 131, 132, 141, 142) extending throughout.

3. Fastening element as described in claim 2, characterised by the fact that the spacer webs (111, 112) integrated at inner wall of the clamp-type profile strip (1) facing the base (21) of the U-shaped bottom section form, in terms of height and mutual distance from each other, a groove (113) accommodating the head sections (41) of mechanical fixing elements (4).

## Revendications

1. Elément de fixation de canaux de câbles sur des murs ou d'autres supports, le canal de câbles étant constitué d'une partie inférieure en U et d'un élément de couvercle s'encliquetant avec les extrémités libres des ailes en U, caractérisé par le fait que l'élément de fixation est une barre profilée (1) en forme de bride, adaptée aux dimensions extérieures du canal de câbles et comportant deux zones d'extrémité libres; dans la zone de recouvrement de l'extrémité libre de la première aile en U (23), cette barre, avec l'élément de couvercle (14) disposé au-dessus du couvercle (3), est mobile par rapport à ses autres zones de paroi (11, 12, 13) grâce à une charnière (15) et. dans la zone du recouvrement de l'extrémité libre de la seconde aile en U (22), elle présente des crochets (123) traversant dans les zones des extrémité libres et un contre-crochet (143) traversant sur l'élément de couvercle (14) pour former une liaison d'encliquetage.

2. Elément de fixation selon la revendication 1, caractérisé par le fait que la barre profilée en forme de bride (1) présente des entretoises d'écartement (111, 112, 121, 122, 131, 132, 141, 142) traversantes, dépassant vers l'intérieur.

3. Elément de fixation selon la revendication 2. caractérisé par le fait que les entretoises d'écartement (111, 112) formées sur la paroi interne de la barre profilée (1) en forme de bride opposée à la base (21) de la partie inférieure en U, forment en hauteur et à une certaine distance entre elles, une rainure de réception (113) pour les têtes (41) d'éléments de fixation mécaniques (4).
